# EUROPEAN PATENT SPECIFICATION

(11) **EP 2 986 040 B1**
(45) Date of publication and mention of the grant of the patent: **31.01.2018**
(21) Application number: 13882034.5
(22) Date of filing: 09.08.2013
(51) Int. Cl.: H04W 4/16, H04M 15/00

(54) **CALL SERVICE METHOD AND SYSTEM, SYSTEM TERMINAL**
ANRUFDIENSTVERFAHREN UND -SYSTEM, SYSTEMENDGERÄT
SYSTÈME ET PROCÉDÉ DE SERVICE D'APPELS, TERMINAL DE SYSTÈME

(30) Priority: 12.04.2013 CN 201310125570
(43) Date of publication of application: 17.02.2016
(73) Proprietor: ZTE Corporation, Shenzhen, Guangdong 518057 (CN)
(72) Inventor: DING, Zhiyu, Shenzhen Guangdong 518057 (CN); YANG, Jianjun, Shenzhen Guangdong 518057 (CN); WANG, Yifeng, Shenzhen Guangdong 518057 (CN)
(74) Representative: Mozzi, Matteo
(86) International application number: PCT/CN2013/081168
(87) International publication number: WO 2014/166184

(56) References cited:
- EP-A1- 2 237 542
- EP-A2- 1 585 355
- CN-A- 1 921 390
- CN-A- 101 467 434
- CN-A- 101 527 893
- US-A1- 2004 174 965

## Description

### Technical Field

The disclosure relates to a method, system, system end and calling terminal for a call service, and in particular to a call service technology for implementing pay for another network call charges and controlling call charges of one or more enterprises.

### Background

With gradual increase of people activities, people communicate with each other more and more frequently, and the telephone plays an irreplaceable role as a main communication means. Particularly with fast popularization of a mobile terminal, consumption caused by the mobile terminal is becoming one of main consumption ways of people, and a main function of the mobile terminal is communication. The charges generated in the communication are a main consumption way of various mobile terminals all the time, so that how to control or reduce the charges of the communication effectively may become a problem to be solved by individuals or enterprises, and many profits may be brought to the enterprises by controlling the charges of the communication rationally.

At present, operators charge call charges mainly in two ways: one way is to charge communication charges from individual users, wherein different charges are charged according to different types of user numbers and short distances or long distances of calls, and the individual users cannot enjoy any privileges for the charge; and the other way is to charge the charges from group type users, wherein the charges are charged for a fixed number or a mobile terminal number in a group, this service is mainly a preferential service provided by the operators to group clients, such as a group V network, thus, less charges may be charged for calls of a group operator or other group registration numbers; whereas, this preferential service sets a relatively strict restriction on the place that a number is subordinate to, and a person cannot enjoy the preferential service continuously if making a call in other places.

A patent application, of which a application number is CN201010597581.3 and a title of invention is "system and method for implementing Click-To-Dial (CTD) service and related devices", a patent application, of which a application number is CN200810305179.6 and a title of invention is "system and method for managing communication charge", and a patent application, of which a application number is CN200510080261 and a title of invention is "method for implementing CTD service" disclose three kinds of pay for another call services.

The patent application CN201010597581.3 has the following disadvantages: firstly, the patent application only describes a method and device for implementing a CTD call and mainly focuses on a server level so as to make little sense on individuals or enterprises; secondly, in this patent application, network deployment is mainly tested and the influence on charges of individuals or enterprises is not considered; and thirdly, system layout is too complex so that the stability and reliability of a system are reduced.

The patent application CN200810305179.6 has the following disadvantages: first, a method for managing user charges is merely provided, and communication charges can be reduced only by reducing the time of calls so that the patent application cannot be widely applied; second, the charge of a single phone is controlled in a component mainly by embedding a phone terminal, so that the patent application cannot be popularized greatly.

The patent application CN200510080261 has the following disadvantages: first, only the feeling of service users is concerned but to bring better deep experiencing to the user is not mentioned; second, only real-time display and view of a service status is concerned but to bring benefits for users is not considered.

Document EP 2237542 A1 discloses a method, a device and a system for realizing unified communication in the field of communication.

Document CN 101527893 A relates to a voice communication calling method for a calling party at a software client.

To sum up, there is still no effective solution has been presented currently for controlling the expense of call charges of enterprises by pay for another call services in the related art.

### Summary

The present invention is defined in the attached independent claims. Further, preferred features may be found in the dependent claims appended thereto.

According to the embodiments of the disclosure, the system end receives the network call request initiated by the calling terminal at first, then initiates double calls to the calling terminal and the called terminal, and finally bridges the speech path, so that resources of the system end are utilized effectively, and the voice call is simple in flow and easy to implement.

### Brief Description of the Drawings

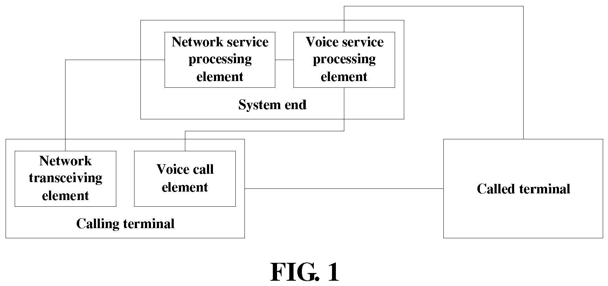

Fig. 1 is a structural diagram showing a system for a call service in a first embodiment of the disclosure;
Fig. 2 is a flowchart showing a method for data processing of a call service in a second embodiment of the disclosure; and
Fig. 3 is a diagram showing signalling interaction of a method for a call service in the second embodiment of the disclosure.

### Detailed Description of Embodiments

The implementation process of the disclosure is described below in combination with drawings and embodiments in detail.

### First embodiment

The first embodiment of the disclosure provides a system for a call service, including: a calling terminal, a called terminal and a system end, wherein the system end is mainly deployed in a parlay gateway and an application server, and is responsible for controlling and processing a call. Except the capability of supporting a voice call service, no other special requirements are set to the called terminal. The calling terminal includes: a network transceiving element and a voice call element; and the system end includes: a network service processing element and a voice service processing element. When a call service is initiated, the network transceiving element sends a network call request to the network service processing element, wherein the network call request includes identification information of the calling terminal and the called terminal; the network service processing element parses the network call request to obtain a number of the calling terminal and a number of the called terminal according to the identification information in the network call request and sends a voice call request to the voice service processing element; and the voice service processing element sends a double-call request to the calling terminal and the called terminal, i.e., initiating and putting through a voice call respectively, and is configured to bridge a speech path between the calling terminal and the called terminal; and finally, the calling terminal communicates with the called terminal.

The voice service processing element can initiate a double-call request to the calling terminal and the called terminal in any one of the following two ways:
the voice service processing element initiates the voice call to the calling terminal and puts through the calling terminal at first; and then the voice service processing element initiates the voice call to the called terminal and puts through the called terminal; and
the voice service processing element initiates the voice call to the calling terminal and the called terminal and puts through the calling terminal and the called terminal at the same time.

The system end further includes: a charging element which can generate a phone bill according to call records of double calls, wherein a charge object of the phone bill can be a preset charging number, such as an enterprise operator. Of course, it can also be any preset number, such as the number of the calling terminal.

In an example embodiment, in order to enable the calling terminal to acquire the status of call service in real time, the network service processing element can further push status information to the network transceiving element of the calling terminal through a network; and the network transceiving element of the calling terminal updates a call display status according to the status information.

To control call charges of the calling terminal, a soft number can be set for a user and is bound with a terminal number of the user. A user data database is arranged in the network service processing element to save a corresponding relationship between the soft number and a number of the calling terminal. The paying for another service of the user is managed by managing the call service of the soft number. When a call is initiated, the network transceiving element sends the network call request to the network service processing element by taking the soft number as the identification information of the calling terminal.

### Second embodiment

A method for a call service is described below by the process of initiating the call service and establishing communication with a mobile terminal B through a mobile terminal A.

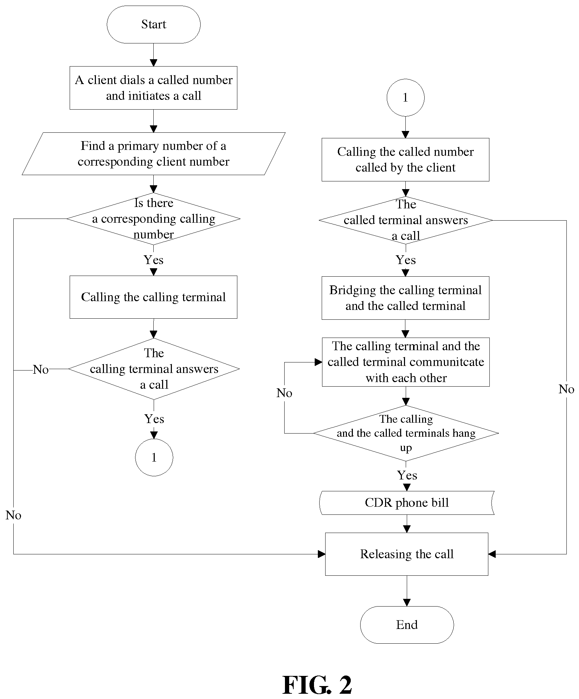

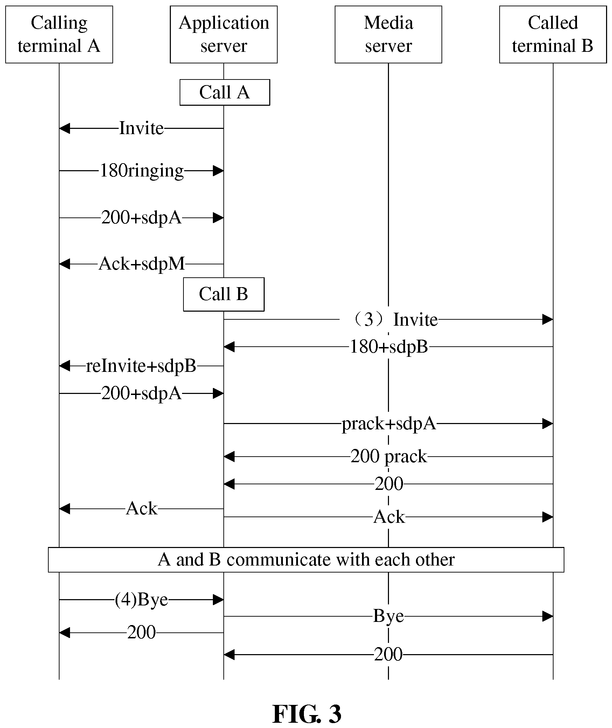

The specific processing steps for the data processing flow of a call service as shown in Fig. 2 and the signalling interaction process for the call service as shown in Fig. 3 are as follows:
Step 1: Registration of a client. The client registers in a soft switch or an application server via an allocated soft number and becomes available after passing the authentication; and the calling terminal A is required to be registered in the embodiment.
Step 2: Call start by the client. The calling terminal A starts to call a core network through a message, and the core network triggers a corresponding application server according to a message field in the message, so that a system side receives call information from the network calling terminal A; meanwhile, the application server returns a response message corresponding to the call to the calling terminal A, and the calling terminal A updates display status of the client according to the response message.
Step 3: Processing of a system end. The system end queries whether the soft number is bound with a calling number through a database after receiving the call; if the soft number is bound with the calling number, the call is continued; if the soft number is not bound with a calling number, the current call is ended, and a corresponding ending status is sent to the calling terminal A which ends the call.
Step 4: The system end calls the number of the calling terminal A. If there is a matched calling number, a service calls the calling number at first to wait for the operation response of the calling number.
Step 5: Ringing of the calling terminal A. When the calling terminal A rings, the system side pushes a corresponding call status to the calling terminal A, and the calling terminal A modifies a corresponding display status according to status information.
Step 6: Answering processing of the calling terminal A. If the service sends a corresponding status to the calling terminal A after the number of the calling terminal A receives the call, the subsequent processing is carried out, otherwise, the call is ended.
Step 7: The system end calls a number of a called terminal B. After the calling terminal A answers, the service calls the number of the called terminal B dialled by the soft number at the beginning and pushes a corresponding call status to the calling terminal A.
Step 8: Ringing of the called terminal B. When the called terminal B rings, the system end pushes a corresponding call status to the calling terminal A, and the calling terminal A modifies a corresponding display status according to status information.
Step 9: Ring-back tone play of the calling terminal A. After receiving a 180ringing message of the number of the called terminal B, the service plays ring-back tone to the calling terminal A via a media server.
Step 10: Answering of the called terminal B number. After the answering of the number of the called terminal B, the system end bridges the number of the calling terminal A and the number of the called terminal B, and pushes a corresponding status "on the phone" to the calling terminal.
Step 11: The calling terminal A communicates with the called terminal B. After the number of the calling terminal A and the number of the called terminal B are bridged, the calling terminal A and the called terminal B start to communicate with each other.
Step 12: Processing of hang-up. After any one of the calling terminal A and the called terminal B hangs up, the service ends the call, gives the Call Detain Record (CDR) of a payment number (a default system operator), and pushes a corresponding status "hanging up the call" to the client.
Step 13: Ending of flow. After receiving the status "hanging up the call", the calling terminal A releases resources and waits for a next initiation of a network call.
Step 14: The system end makes a charge according to a charge number set in the CDR to implement any payment.

According to the technical solution provided by the embodiments of the disclosure, the system end receives the network call request from the calling terminal at first, then initiates double calls to the calling terminal and the called terminal, and finally bridges the speech path, so that resources of the system end are utilized effectively, and the voice call is simple in flow and easy to implement.

Furthermore, based on the double-call records of the system end, the charges of the network call request of the calling terminal can be shifted to that of paying for another number, so that flexible paying for another processing is implemented, and the effects of controlling call charges and saving the expense of enterprises are achieved.

In addition, the effect of controlling the call charges of enterprise staff rationally is achieved by binding the number of the calling terminal with the soft number.

The embodiments mentioned-above are only the preferable embodiment of the disclosure, which are not used to restrict the disclosure. Any amendments, equivalent substitutions, improvements, etc. within the principle of the disclosure are all included in the scope of the protection of the disclosure.

## Claims

1. A method for a call service, comprising:
receiving, by a system end, a network call request initiated by a calling terminal, wherein the network call request comprises identification information of the calling terminal and a called terminal;
parsing, by the system end, the network call request to obtain a number of the calling terminal and a number of the called terminal according to the identification information in the network call request;
initiating, by the system end, a voice call to the calling terminal and the called terminal respectively and putting through, by the system end, the calling terminal and the called terminal respectively;
bridging, by the system end, a speech path between the calling terminal and the called terminal, communicating, by the calling terminal, with the called terminal; and
after the communication between the calling terminal and the called terminal ends, generating, by the charging element of the system end, a phone bill for paying for another billing number according to double calls to the calling terminal and the called terminal.

2. The method for a call service as claimed in claim 1, wherein initiating, by the system end, the voice call to the calling terminal and the called terminal respectively and putting through, by the system end, the calling terminal and the called terminal respectively adopt any one of the following two ways:
initiating, by the system end, the voice call to the calling terminal and putting through, by the system end, the calling terminal at first; and then initiating, by the system end, the voice call to the called terminal and putting through, by the system end, the called terminal; and
initiating, by the system end, the voice call to the calling terminal and the called terminal and putting through, by the system end, the calling terminal and the called terminal at the same time.

3. The method for a call service as claimed in claim 1 or 2, wherein when the system end operates a service, pushing, by the system end, status information to the calling terminal through a network, and updating, by the calling terminal, a call display status according to the status information.

4. The method for a call service as claimed in claim 1 or 2, wherein the calling terminal initiating the network call request to the system end comprises: registering, by the calling terminal, in the system end, acquiring, by the calling terminal, a soft number allocated by the system end and binding, by the calling terminal, the soft number with the number of the calling terminal; and initiating, by the calling terminal, the network call request to the system end according to the soft number.

5. A system for a call service, comprising: a calling terminal, a called terminal and a system end;
the calling terminal configured to initiate a network call request to the system end, wherein the network call request comprises identification information of the calling terminal and the called terminal;
the system end configured to parse the network call request to obtain a number of the calling terminal and a number of the called terminal according to the identification information in the network call request, initiate a voice call to the calling terminal and the called terminal respectively, put through the calling terminal and the called terminal respectively, and bridge a speech path between the calling terminal and the called terminal;
the calling terminal further configured to communicate with the called terminal after the speech path is bridged; and
after the communication between the calling terminal and the called terminal ends the charging element of the system end is further configured to generate a phone bill for paying for another billing number according to double calls to the calling terminal and the called terminal.

6. A system end for a call service, comprising: a network service processing element, a voice service processing element and a charging element, wherein
the network service processing element is configured to receive a network call request initiated by a calling terminal, wherein the network call request comprises identification information of the calling terminal and a called terminal, and parse the network call request to obtain a number of the calling terminal and a number of the called terminal according to the identification information in the network call request and send a voice call request to the voice service processing element;
the voice service processing element is configured to initiate a voice call to the calling terminal and the called terminal respectively, put through the calling terminal and the called terminal respectively and bridge a speech path between the calling terminal and the called terminal; and
the charging element is configured to generate a phone bill for paying for another billing number according to double calls made by the voice service processing element to the calling terminal and the called terminal.

7. The system end for a call service as claimed in claim 6 wherein the voice service processing element is configured to initiate the voice call to the calling terminal and the called terminal respectively and put through the calling terminal and the called terminal respectively in any one of the following two ways:
the voice service processing element initiates the voice call to the calling terminal and puts through the calling terminal at first; and then the voice service processing element initiates the voice call to the called terminal and puts through the called terminal; and
the voice service processing element initiates the voice call to the calling terminal and the called terminal, and puts through the calling terminal and the called terminal at the same time.

8. The system end for a call service as claimed in claim 7 or 8, wherein the network service processing element is further configured to push status information to the calling terminal through a network.

9. The system end for a call service as claimed in claim 7 or 8, wherein the network service processing element comprises: a user data database configured to save a corresponding relationship between a soft number and the number of the calling terminal; and the network service processing element configured to receive the network call request initiated by the calling terminal through the soft number.

## Patentansprüche

1. Verfahren für einen Anrufdienst, umfassend:
Empfangen einer durch ein rufendes Endgerät initiierten Netzwerkanrufanfrage durch ein Systemende, wobei die Netzwerkanrufanfrage eine Identifikationsinformation des rufenden Endgeräts und eines gerufenen Endgeräts umfasst;
Parsen der Netzwerkanrufanfrage durch das Systemende, um gemäß der Identifikationsinformation in der Netzwerkanrufanfrage eine Nummer des rufenden Endgeräts und eine Nummer des gerufenen Endgeräts zu erhalten;
Initiieren eines Sprachanrufs jeweils an das rufende Endgerät und das gerufene Endgerät durch das Systemende und Durchstellen jeweils des rufenden Endgeräts und des gerufenen Endgeräts durch das Systemende;
Überbrücken eines Sprechpfads zwischen dem rufenden Endgerät und dem gerufenen Endgerät durch das Systemende, Kommunizieren mit dem gerufenen Endgerät durch das rufende Endgerät; und
Generieren einer Telefonrechnung durch das Berechnungselement des Systemendes, nachdem die Kommunikation zwischen dem rufenden Endgerät und dem gerufenen Endgerät beendet worden ist, um gemäß doppelten Anrufen an das rufende Endgerät und das gerufene Endgerät für eine andere Rechnungsnummer zu bezahlen.

2. Verfahren für einen Anrufdienst nach Anspruch 1, wobei ein Initiieren des Sprachanrufs jeweils an das rufende Endgerät und das gerufene Endgerät durch das Systemende und ein Durchstellen jeweils des rufenden Endgeräts und des gerufenen Endgeräts durch das Systemende jeglichen der folgenden zwei Wege übernimmt:
Initiieren des Sprachanrufs an das rufende Endgerät durch das Systemende und Durchstellen des rufenden Endgeräts durch das Systemende zuerst; und dann Initiieren des Sprachanrufs an das gerufene Endgerät durch das Systemende und Durchstellen des gerufenen Endgeräts durch das Systemende; und
Initiieren des Sprachanrufs an das rufende Endgerät und das gerufene Endgerät durch das Systemende und Durchstellen des rufenden Endgeräts und des gerufenen Endgeräts durch das Systemende zu der gleichen Zeit.

3. Verfahren für einen Anrufdienst nach Anspruch 1 oder 2, wobei, wenn das Systemende einen Dienst betreibt, Weitergeben durch ein Netzwerk einer Statusinformation an das rufende Endgerät durch das Systemende und Aktualisieren eines Anrufanzeigestatus durch das gerufene Endgerät gemäß der Statusinformation.

4. Verfahren für einen Anrufdienst nach Anspruch 1 oder 2, wobei ein Initiieren der Netzwerkanrufanfrage an das Systemende durch das rufende Endgerät umfasst: Registrieren in dem Systemende durch das rufende Endgerät, Erfassen einer durch das Systemende zugeteilten Soft-Nummer durch das rufende Endgerät und Verbinden der Soft-Nummer mit der Nummer des rufenden Endgeräts durch das rufende Endgerät; und Initiieren der Netzwerkanrufanfrage an das Systemende durch das rufende Endgerät gemäß der Soft-Nummer.

5. System für einen Anrufdienst, umfassend: ein rufendes Endgerät, ein gerufenes Endgerät und ein Systemende;
wobei das rufende Endgerät dazu eingerichtet ist, eine Netzwerkanrufanfrage an das Systemende zu initiieren, wobei die Netzwerkanrufanfrage eine Identifikationsinformation des rufenden Endgeräts und des gerufenen Endgeräts umfasst;
wobei das Systemende dazu eingerichtet ist, die Netzwerkanrufanfrage zu parsen, um gemäß der Identifikationsinformation in der Netzwerkanrufanfrage eine Nummer des rufenden Endgeräts und eine Nummer des gerufenen Endgeräts zu erhalten, einen Sprachanruf jeweils an das rufende Endgerät und das gerufene Endgerät zu initiieren, das rufende Endgerät und das gerufene Endgerät jeweils durchzustellen und einen Sprechpfad zwischen dem rufenden Endgerät und dem gerufenen Endgerät zu überbrücken;
wobei das rufende Endgerät ferner dazu eingerichtet ist, mit dem gerufenen Endgerät zu kommunizieren, nachdem der Sprechpfad überbrückt worden ist; und
wobei das Berechnungselement des Systemendes ferner dazu eingerichtet ist, eine Telefonrechnung zu generieren, nachdem die Kommunikation zwischen dem rufenden Endgerät und dem gerufenen Endgerät beendet worden ist, um gemäß doppelten Anrufen an das rufende Endgerät und das gerufene Endgerät für eine andere Rechnungsnummer zu bezahlen.

6. Systemende für einen Anrufdienst, umfassend: ein Netzwerkdienstverarbeitungselement, ein Sprachdienstverarbeitungselement und ein Berechnungselement, wobei
das Netzwerkdienstverarbeitungselement dazu eingerichtet ist, eine durch ein rufendes Endgerät initiierte Netzwerkanrufanfrage zu empfangen, wobei die Netzwerkanrufanfrage eine Identifikationsinformation des rufenden Endgeräts und des gerufenen Endgeräts umfasst, und die Netzwerkanrufanfrage zu parsen, um gemäß der Identifikationsinformation in der Netzwerkanrufanfrage eine Nummer des rufenden Endgeräts und eine Nummer des gerufenen Endgeräts zu erhalten und eine Sprachanrufanfrage an das Sprachdienstverarbeitungselement zu senden;
das Sprachdienstverarbeitungselement dazu eingerichtet ist, einen Sprachanruf jeweils an das rufende Endgerät und das gerufene Endgerät zu initiieren, das rufende Endgerät und das gerufene Endgerät jeweils durchzustellen und einen Sprechpfad zwischen dem rufenden Endgerät und dem gerufenen Endgerät zu überbrücken; und
das Berechnungselement dazu eingerichtet ist, eine Telefonrechnung zu generieren, um gemäß durch das Sprachdienstverarbeitungselement getätigten doppelten Anrufen an das rufende Endgerät und das gerufene Endgerät für eine andere Rechnungsnummer zu bezahlen.

7. Systemende für einen Anrufdienst nach Anspruch 6, wobei das Sprachdienstverarbeitungselement dazu eingerichtet ist, auf jeglichen der folgenden zwei Wege den Sprachanruf jeweils an das rufende Endgerät und das gerufene Endgerät zu initiieren und das rufende Endgerät und das gerufene Endgerät jeweils durchzustellen:
das Sprachdienstverarbeitungselement initiiert zuerst den Sprachanruf an das rufende Endgerät und stellt das rufende Endgerät durch; und dann initiiert das Sprachdienstverarbeitungselement den Sprachanruf an das gerufene Endgerät und stellt das gerufene Endgerät durch; und
das Sprachdienstverarbeitungselement initiiert zu der gleichen Zeit den Sprachanruf an das rufende Endgerät und das gerufene Endgerät und stellt das rufende Endgerät und das gerufene Endgerät durch.

8. Systemende für einen Anrufdienst nach Anspruch 7 oder 8, wobei das Netzwerkdienstverarbeitungselement ferner dazu eingerichtet ist, eine Statusinformation durch ein Netzwerk an das rufende Endgerät weiterzugeben.

9. Systemende für einen Anrufdienst nach Anspruch 7 oder 8, wobei das Netzwerkdienstverarbeitungselement umfasst: eine Benutzerdatendatenbank, welche dazu eingerichtet ist, eine entsprechende Beziehung zwischen einer Soft-Nummer und der Nummer des rufenden Endgeräts zu speichern; und das Netzwerkdienstverarbeitungselement dazu eingerichtet ist, die durch das rufende Endgerät initiierte Netzwerkanrufanfrage durch die Soft-Nummer zu empfangen.

## Revendications

1. Procédé pour un service d'appels comprenant :
la réception, par un terminal de système, d'une demande d'appel de réseau émise par un terminal appelant, dans lequel la demande d'appel de réseau comprend des informations d'identification du terminal appelant et d'un terminal appelé ;
l'analyse syntaxique, par le terminal de système, de la demande d'appel de réseau pour obtenir un numéro du terminal appelant et un numéro du terminal appelé en fonction des informations d'identification dans la demande d'appel de réseau ;
le lancement, par le terminal de système, d'un appel vocal respectivement vers le terminal appelant et le terminal appelé et la mise en relation, par le terminal de système, respectivement du terminal appelant et du terminal appelé ;
le pontage, par le terminal de système, d'un chemin de parole entre le terminal appelant et le terminal appelé, communiquant, par le terminal appelant, avec le terminal appelé ; et
après que la communication entre le terminal appelant et le terminal appelé se termine, la génération, par l'élément de tarification du terminal de système, d'une facture de téléphone pour payer pour un autre numéro de facturation en fonction de doubles appels vers le terminal appelant et le terminal appelé.

2. Procédé pour un service d'appels selon la revendication 1, dans lequel le lancement, par le terminal de système, de l'appel vocal respectivement vers le terminal appelant et le terminal appelé et la mise en relation, par le terminal de système, respectivement du terminal appelant et du terminal appelé adopte l'une quelconque des deux manières suivantes :
le lancement, par le terminal de système, de l'appel vocal vers le terminal appelant et la mise en relation, par le terminal de système, du terminal appelant en premier ; et ensuite le lancement, par le terminal de système, de l'appel vocal vers le terminal appelé et la mise en relation, par le terminal de système, du terminal appelé ; et
le lancement, par le terminal de système, de l'appel vocal vers le terminal appelant et le terminal appelé et la mise en relation, par le terminal de système, du terminal appelant et du terminal appelé en même temps.

3. Procédé pour un service d'appels selon la revendication 1 ou 2, dans lequel, quand le terminal de système effectue un service, la fourniture, par le terminal de système, d'informations d'état au terminal appelant par le biais d'un réseau, et la mise à jour, par le terminal appelant, d'un état d'affichage d'appel en fonction des informations d'état.

4. Procédé pour un service d'appels selon la revendication 1 ou 2, dans lequel l'émission par le terminal appelant de la demande d'appel de réseau vers le terminal de système comprend : l'enregistrement, par le terminal appelant, dans le terminal de système, l'acquisition, par le terminal appelant, d'un numéro soft attribué par le terminal de système et liant, par le terminal appelant, le numéro soft au numéro du terminal appelant ; et l'émission, par le terminal appelant, d'une demande d'appel de réseau vers le terminal de système en fonction du numéro soft.

5. Système pour un service d'appels comprenant : un terminal appelant, un terminal appelé et un terminal de système ;
le terminal appelant étant configuré pour émettre une demande d'appel de réseau vers le terminal de système, dans lequel la demande d'appel de réseau comprend des informations d'identification du terminal appelant et du terminal appelé ;
le terminal de système étant configuré pour analyser syntaxiquement la demande d'appel de réseau pour obtenir un numéro du terminal appelant et un numéro du terminal appelé en fonction des informations d'identification dans la demande d'appel de réseau, lancer un appel vocal respectivement vers le terminal appelant et le terminal appelé, mettre en relation respectivement le terminal appelant et le terminal appelé, et établir un pont d'un chemin de parole entre le terminal appelant et le terminal appelé ;
le terminal appelant étant configuré en outre pour communiquer avec le terminal appelé après que le chemin de parole est ponté ; et
après que la communication entre le terminal appelant et le terminal appelé se termine, l'élément de tarification du terminal de système est configuré en outre pour générer une facture de téléphone pour payer pour un autre numéro de facturation en fonction de doubles appels vers le terminal appelant et le terminal appelé.

6. Terminal de système pour un service d'appels comprenant : un élément de traitement de service de réseau, un élément de traitement de service vocal et un élément de tarification, dans lequel
l'élément de traitement de service de réseau est configuré pour recevoir une demande d'appel de réseau émise par un terminal appelant, dans lequel la demande d'appel de réseau comprend des informations d'identification du terminal appelant et d'un terminal appelé et analyser syntaxiquement la demande d'appel de réseau pour obtenir un numéro du terminal appelant et un numéro du terminal appelé en fonction des informations d'identification dans la demande d'appel de réseau et envoyer une demande d'appel vocal à l'élément de traitement de service vocal ;
l'élément de traitement de service vocal est configuré pour lancer un appel vocal respectivement vers le terminal appelant et le terminal appelé, mettre en relation respectivement le terminal appelant et le terminal appelé et établir un pont d'un chemin de parole entre le terminal appelant et le terminal appelé ; et
l'élément de tarification est configuré pour générer une facture de téléphone pour payer pour un autre numéro de facturation en fonction de doubles appels effectués par l'élément de traitement de service vocal vers le terminal appelant et le terminal appelé.

7. Terminal de système pour un service d'appels selon la revendication 6, dans lequel l'élément de traitement de service vocal est configuré pour lancer l'appel vocal respectivement vers le terminal appelant et le terminal appelé et mettre en relation respectivement le terminal appelant et le terminal appelé selon l'une quelconque des deux manières suivantes :
l'élément de traitement de service vocal lance l'appel vocal vers le terminal appelant et met en relation le terminal appelant en premier ; et ensuite l'élément de traitement de service vocal lance l'appel vocal vers le terminal appelé et met en relation le terminal appelé ; et
l'élément de traitement de service vocal lance l'appel vocal vers le terminal appelant et le terminal appelé et met en relation le terminal appelant et le terminal appelé en même temps.

8. Terminal de système pour un service d'appels selon la revendication 6 ou 7, dans lequel l'élément de traitement de service de réseau est configuré en outre pour fournir des informations d'état au terminal appelant par le biais d'un réseau.

9. Terminal de système pour un service d'appels selon la revendication 7 ou 8, dans lequel l'élément de traitement de service de réseau comprend : une base de données des données d'utilisateur configurée pour sauvegarder une relation correspondante entre un numéro soft et le numéro du terminal appelant ; et l'élément de traitement de service de réseau est configuré pour recevoir la demande d'appel de réseau émise par le terminal appelant par le biais du numéro soft.
